# EUROPÄISCHE PATENTSCHRIFT

(11) **EP 2 949 422 B1**
(45) Veröffentlichungstag und Bekanntmachung des Hinweises auf die Patenterteilung: **17.05.2017**
(21) Anmeldenummer: 14170049.2
(22) Anmeldetag: 27.05.2014
(51) Int. Cl.: B23Q 11/12, B23Q 11/14, H02K 9/00

(54) **Vorrichtung zur Kühlung von Maschinenbauteilen mittels PCM**
Device for cooling machine components using PCM
Dispositif de refroidissement de composants de machine au moyen de PCM

(43) Veröffentlichungstag der Anmeldung: 02.12.2015
(73) Patentinhaber: Step-Tec AG, 4542 Luterbach (CH)
(72) Erfinder: Weiss, Lukas, 4054 Basel (CH); Züst, Simon, 8405 Winterthur (CH); Fischer, Ludger Josef, 6300 Zug (CH); Worlitschek, Jörg, 6006 Luzern (CH); Reinhard, Edwin, 3362 Niederönz (CH)
(74) Vertreter: Fenner, Seraina

(56) Entgegenhaltungen:
- EP-A1- 2 073 952
- DE-A1-102012 020 958
- US-A1- 2005 057 102

## Beschreibung

Die vorliegende Erfindung betrifft ein Maschinenelement, insbesondere eine Motorspindel oder eine elektromechanische Antriebseinheit, mit integriertem, inneren Kühlsystem gemäss dem Oberbegriff des unabhängigen Patentanspruches 1 und einen geschlossenen Kühlkreislauf enthaltend ein Maschinenelement mit integriertem, inneren Kühlsystem gemäss dem Oberbegriff des Patentanspruches 10. Ein solches Maschinenelement ist z.B aus der DE 10 2012 020 958 bekannt. Der Kühlung von Maschinenbauteilen in Werkzeugmaschinen kommt heute eine wichtige Bedeutung zu. Moderne Werkzeugmaschinen weisen eine hohe Präzision auf und insbesondere im Formenbau sind in den letzten Jahren die Anforderungen an die Werkzeugmaschine und den darin eingebauten Motorspindeln - vor allem an die Hauptspindel eines Fräskopfes - massiv gestiegen. Die Qualität der Oberflächenbearbeitung eines Werkstückes wird im Wesentlichen durch Vibrationen von der arbeitenden Spindel, dem Bearbeitungsprozess, sowie durch das Temperaturverhalten der Motorspindel und des Maschinengestells beeinträchtigt. Bei den u.a. durch die spanabhebende Bearbeitung des Werksstückes entstehenden Vibrationen wurde in den letzten Jahren sehr viel unternommen, so dass heute die High Performance Präzisionsspindeln den Anforderungen entsprechen. Beim thermischen Verhalten ist man heute hingegen mit den bekannten Kühlmöglichkeiten an Grenzen gestossen. Eine ideal konditionierte Spindel zeigt eine konstante Temperatur und eine homogene Temperaturverteilung innerhalb der Spindel und über alle Betriebszustände auf. Die Realität sieht jedoch anders aus: Spindeln weisen bei Betrieb punktuelle Wärmequellen auf, welche zu einem inhomogenen Wärmeeintrag führen. Typische Wärmequellen innerhalb einer Spindel sind dabei die Lager (Reibung) und der Motor (Cu-, Fe-, Zusatz- und Oberwellenverluste). Diese erwärmen die reale Motorspindel ungleichmässig, wodurch innerhalb der Spindel eine inhomogene Temperaturverteilung entsteht. Die Temperatur variiert dabei sowohl in Umfangsrichtung (sog. polare Temperaturverteilung) wie auch in axialer Richtung.

Die Inhomogenität der Temperaturverteilung kann bei Motorspindeln bekannterweise mit einer Kühlung reduziert werden, welche auch eine konstante Temperatur bei unterschiedlicher Last sicherstellen sollte. Bekannte Kühlungssysteme sind jedoch vor allem bei Präzisionsspindeln nicht in der Lage die Temperaturunterschiede genügend tief zu halten. Diese begrenzte Leistungsfähigkeit bekannter Kühlsysteme stellt heute ein grosses Problem dar.

Die in Maschinen, insbesondere Werkzeugmaschinen, eingebauten Maschinenelemente werden in gewissen Fällen mit Kühlsystemen gekühlt oder thermisch stabilisiert, die einen geschlossenen Kühlkreislauf aufweisen. Wie bereits erwähnt, erfolgt die Kühlung aus verschiedenen Gründen:
- Das Maschinenelement produziert Abwärme, welche zwangsweise abgeführt werden muss, um die Funktion des Elements zu gewährleisten. Andernfalls würde das Element infolge Überhitzung direkt versagen, oder der Wirkungsgrad, die nutzbare Leistung oder die Lebensdauer würden empfindlich reduziert.
- Das Maschinenelement muss aber auch thermisch stabilisiert werden, um seine Funktion - z.B. die Werkstückbearbeitung - korrekt zu erfüllen. Insbesondere trifft dies für präzisionsrelevante Bauteile einer Spindel zu, welche zumeist aus Stahl hergestellt sind und aufgrund ihrer thermischen Ausdehnung bei Temperaturänderungen ihre Dimensionen verändern.

Da in der Regel nur in einer Anfahrphase Maschinenelemente einer Werkzeugmaschine auf Betriebstemperatur erwärmt werden müssen, bleibt im laufenden Betrieb die Kühlfunktion dominant. Daher wird im Folgenden vereinfachend von einem Kühlkreislauf gesprochen, auch wenn dieser nicht nur der reinen ungeregelten Kühlung, sondern auch der Temperaturstabilisierung des Maschinenelementes dient (d.h. die Kühlleistung wird der abzuführenden Wärmemenge angepasst). Im Weiteren beeinflusst ein solcher Kühlkreislauf auch die Temperaturverteilung innerhalb einer Maschine, das heisst zwischen den verschiedenen Maschinenelementen (z.B. Fräskopf, Lager des Fräskopfs und Maschinengestell im Bereich des Fräskopfs). Im Weiteren wird nicht im Detail darauf eingegangen, jedoch kann vereinfachend die Aussage getroffen werden, dass der beste Zustand gewährleistet ist, wenn alle Maschinenelemente und alle Teilelemente innerhalb einer Werkzeugmaschine die gleiche (Betriebs-)Temperatur aufweisen. Diese Temperatur wird nachstehend Solltemperatur genannt. Die nachstehend beschriebenen Lösungen können bei Bedarf für andere Fälle sinngemäss angepasst werden. Diese Solltemperatur liegt im Bereich der Raumtemperatur, oft wenige K höher (beispielsweise üblich sind 24°C), damit die Konvektion mit der Umgebungsluft tendenziell zu einem geringen Wärmefluss in die Umgebung sorgt und nicht umgekehrt die Maschinenkühlung den Raum kühlt. Vereinfachend wird nachstehend davon ausgegangen, dass die Solltemperatur über der Umgebungstemperatur liegt, wobei im umgekehrten Fall die Aussagen sinngemäss anzupassen sind.

Ein geschlossener Kühlkreislauf umfasst bekanntermassen mindestens eine Wärmequelle, eine Wärmesenke und ein Rohrsystem, in dem ein Kühlmedium zwischen Wärmequelle und Wärmesenke zirkuliert. In der Regel wird diese Zirkulation durch eine Pumpe erzwungen. Als geeignetes Kühlmedium wird oft ein wasserbasiertes Kühlmittel verwendet, da es eine niedrige Viskosität und eine hohe spezifische Wärmekapazität hat. Die Durchflussmenge des Kühlmediums ist jedoch limitiert durch die Konstruktion der Wärmequelle (z.B. Grösse der Spindel). Ab einem gewissen Bereich ist die Erhöhung der Wärmeabführung deshalb nur möglich durch die Erhöhung der Wärmkapazität des Kühlmediums. Eine niedrige Viskosität erleichtert dabei die Zirkulation zusätzlich. Eine geringe Durchflussmenge und geringe Viskosität des Kühlmediums ist zudem vorteilhaft, weil dadurch die Dimensionierung der Rohre und der Pumpe kleiner ausfällt und bei der Wärmeübertragung an der Wärmesenke respektive der Wärmequelle eine geringere notwendige Kontaktoberfläche benötigt wird. Beispielhaft wird in der Folge vereinfachend von Wasser als Kühlmedium gesprochen, auch wenn es je nach Anwendung und aus bestimmten Gründen eine andere Flüssigkeit sein kann.

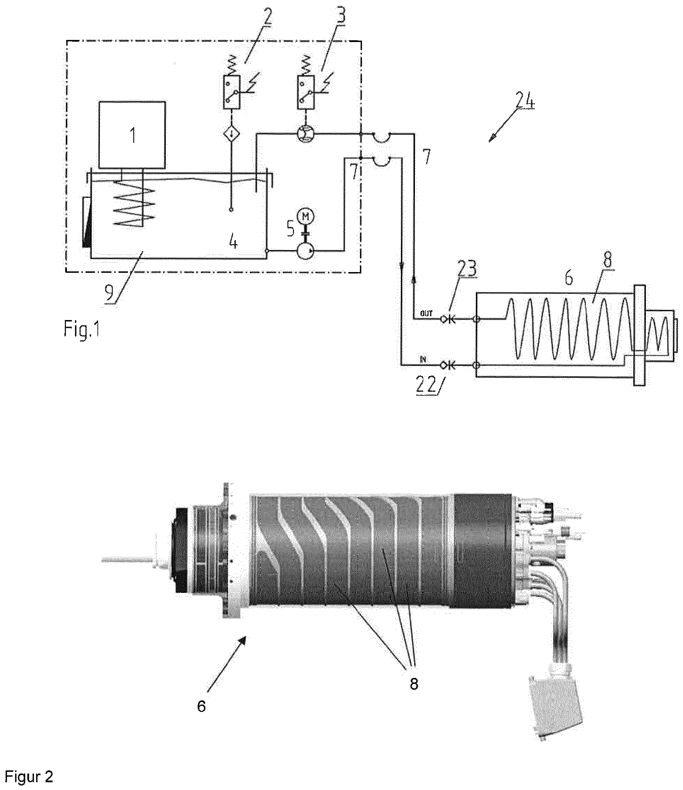

Figur 1 zeigt schematisch die Funktionsweise eines Spindelkühlsystems mit geschlossenem Kühlkreislauf 24. Die zu kühlende Motorspindel 6 (Wärmequelle) wird mittels eines Kühlmediums bzw. - mittels 4 (z.B. Wasser) gekühlt, welches von einer Kühlmittelpumpe 5 angetrieben durch Kühlleitungen 7 in das innere Kühlsystem 8 - hier spiralförmig um den Umfang der Motorspindel 6 angeordnete Kühlleitungen - fliesst. Das aus der eingebauten Spindelkühlvorrichtung bzw. innere Kühlsystem 8 austretende und erwärmte Kühlmedium 4 fliesst seinerseits wieder über Kühlleitungen 7 in ein Reservoir (Wärmesenke) 9 zurück, wo die Wärme dem Kühlmedium 4 wieder entzogen wird. Dieser Wärmeentzug erfolgt im Reservoir der Wärmesenke 9 durch einen Kühlkompressor 1, welcher mittels eines Temperaturwächters 2 geregelt wird, der beispielsweise das Kühlmedium auf 24°C kühlt. Der Kühlkompressor 1 selbst kann dabei eine tiefere Temperatur als 24°C haben. Im dargestellten geschlossenen Kühlkreislauf 24 der Figur 1 ist zudem ein Strömungswächter mit Meldekontakt 3 eingebaut.
Die Figur 2 zeigt im Übrigen wie die Kühlleitungen eines inneren Kühlsystems 8 in einer Motorspindel tatsächlich angeordnet sein könnten.

Es ist allgemein bekannt in Werkzeugmaschinen Kühlvorrichtungen vorzusehen. So legt die EP1252970A1 beispielsweise offen, wie in einer Werkzeugmaschine mit einer geschlossenen Haube, unter Einbezug von Kühlkreisläufen und der Wärmekonvektion durch die Luft die wesentlichen Elemente der Maschine vorteilhafterweise einer Referenztemperatur angenähert werden können.
Die Publikation EP 376 178 A1 legt dar, wie eine Motorspindel in einer Werkzeugmaschine mit einem Kühlsystem mit gasförmigem Kühlmedium ausgelegt wird, um eine hinreichende Kühlung zu erzielen. Auf die Thematik der Temperaturunterschiede zwischen Vor- und Rücklauf geht die Schrift nicht ein.
Die EP 1 927 431 A1 zeigt eine vorteilhafte Auslegung der Wärmesenke für eine Spindelkühlung mit welcher die Vorlauftemperatur des Kühlmediums für die Spindel in engen Grenzen geregelt werden kann. Aus dieser Schrift wird der grosse Aufwand ersichtlich, welcher mit einer Temperaturstablisierung in einem konventionellen Kühlsystem verbunden ist.

Bei derart aufgebauten Kühlsystemen begrenzt die natürlicherweise beschränkte Wärmekapazität des Kühlmediums die Wärmeabfuhr und weitere Funktionen der Kühlung aus mehreren Gründen:
Erstens reagieren Kühlmedien "sensibel", d. h. die aufgenommene Wärme erhöht die Temperatur des Mediums umgekehrt proportional zur Wärmekapazität des Mediums. Beim Eintritt des Kühlmediums in die Wärmequelle ist die Temperatur zwangsläufig tiefer als beim Austritt. Es ist deshalb nicht möglich, mit einem Kühlkreislauf mehrere Wärmequellen in Serie (vgl. Figur 2) auf der gleichen Temperatur zu stabilisieren, erst recht nicht, wenn sie sich zeitlich variabel verhalten. Eine Spindel, resp. ein Maschinenelement weist jedoch häufig mehr als eine Wärmequelle auf (z.B. am Vorder- resp. Hinterlager oder an den Wicklungen im mittleren Bereich der Spindel), wobei idealerweise alle Bereiche des Maschinenelementes auf die gleiche Temperatur stabilisiert werden sollten. Dieser Nachteil kann mit einer Parallelschaltung vermindert werden, diese bringt aber weitere Probleme mit sich, wie die Steuerung des Durchflusses durch die verschiedenen parallelen Äste des Kühlnetzes. Unabhängig von Parallel- oder Reihenschaltung der Kühlkreisläufe, der Anzahl vorhandener Wärmequellen oder dem Massenstrom des geführten Kühlmediums: Ein Maschinenelement kann durch diese Massnahmen nie zeitlich und örtlich isotherm - d.h. das Element weist überall dieselbe und konstante Temperatur auf - gehalten werden.

Zweitens hängt der Wärmefluss von der Wärmequelle zum Kühlmedium von der Temperaturdifferenz ab. Steigt die Temperatur der Quelle aufgrund einer höheren erzeugten Wärmemenge an (z.B. aufgrund höherer Motorleistung), so steigt als Folge der lokalen Wärmeaufnahme auch die Temperatur des Kühlmediums an (das Kühlmedium reagiert damit sensibel). Durch diesen Temperaturanstieg nimmt die Temperaturdifferenz zwischen Wärmequelle und Kühlmedium ab und der Wärmefluss wird dadurch gemindert, die Kühlleistung nimmt folglich tendenziell ab und dies in Fällen und an Orten, in denen gerade mehr Kühlleistung gefordert wäre.

Drittens hängt die Kühlleistung wesentlich vom Durchfluss des Kühlmediums ab. Wenn der Durchfluss erhöht wird, steigt bei gegebenem Rohrquerschnitt der erforderliche Pumpendruck an. Als Folge davon muss die Pumpenleistung erhöht werden und der erhöhte Pumpendruck erwärmt zwangsläufig auch das Kühlmedium. Diese Abwärme muss vom Kühlmedium selbst abgeführt werden und mindert damit bereits die Kühlleistung an der eigentlichen Wärmequelle. Die verfügbare Kühlleistung kann deshalb durch Steigerung des Durchflusses nur unterproportional erhöht werden.

Viertens besteht bei erhöhtem Durchfluss die Gefahr, dass sich im Kühlmedium eine turbulente Strömung bildet, was den notwendigen Pumpendruck und damit die Pumpenleistung noch weiter erhöht und zur erläuterten Minderung der verfügbaren Kühlleistung führt.

Fünftens kann in der Praxis der Rohrdurchmesser und die Form des Querschnitts oft nicht frei gewählt werden. Die betreffenden Maschinenelemente müssen vielfältige Ansprüche erfüllen und ihre Konzeption stellt den bestmöglichen Kompromiss zur optimalen Erfüllung dieser Ansprüche dar. Der verfügbare Raum für den Kühlkreislauf ist beschränkt und durch die Komplexität der Elemente verschiedenen, darunter vor allem geometrischen Einschränkungen unterworfen (siehe Kühlleitungen in Figur 2).

Sechstens stellt die Regelung der Temperatur des Kühlmediums eine relevante Schwierigkeit dar. Eine enge Toleranz in Bezug auf die Solltemperatur kann nur mit aufwändigen Aggregaten sowie Sensorik, Hard- und Software zur Regelung gewährleistet werden. Üblicherweise werden solche Kühlungen mit einem sogenannten Zwei-Punkt-Regler betrieben. Dies bedeutet, dass die Wärmesenke kühlt, sobald der obere Regelpunkt erreicht ist, so dass das Kühlmedium beim Verlassen der Wärmesenke in der Temperatur periodisch zwischen unterem und oberem Regelpunkt schwankt. Beispielsweise ist aus Bearbeitungsspindeln zur Präzisionsbearbeitung bekannt, dass diese Art von Schwankung, auch wenn sie nur wenige Kelvin oder gar weniger als 1 K beträgt, in der Anwendung bereits eine nachteilige Auswirkung hat.

Siebtens kühlen sich während Betriebsunterbrüchen die Maschinenelemente ab und beispielsweise im Fall einer Präzisionsbearbeitung ist nach der Wiederaufnahme des Betriebs ein Aufwärmphase notwendig, um wieder einen thermisch stabilen Betriebszustand herzustellen.

Von den vorangehenden Ausführungen völlig losgelöst, sind in anderen technischen Gebieten sogenannte Phase Change Materials (PCM) für ihre Wärmeaufnahmefähigkeit bekannt. PCM sind Stoffe, welche bei einer bestimmten Temperatur eine Phasenumwandlung vollziehen und dabei entweder eine grosse Wärmemenge freisetzen oder aufnehmen. Inmitten der Phasenumwandlung - zum Beispiel bei der Zustandsänderung von fest zu flüssig - wird die Temperatur durch Zu- oder Abfluss von Wärme nicht verändert. Nach Aussen entsteht dabei die Wirkung, als ob die spezifische Wärmekapazität von PCM enthaltenden Flüssigkeiten wesentlich höher als bei konventionellen Kühlmedien ist. Die Erforschung von PCMs erfolgte vor allem, um eine höhere Speicherdichte für Wärme zu erhalten, insbesondere zum Speichern von Solarwärme. Weiter werden PCM in sogenannten Latentwärmespeicher u.a. in der Gebäudetechnik eingesetzt, um die thermische Trägheit von Gebäuden zu erhöhen und um Leistungsspitzen zu reduzieren. Bekannt ist auch das Nivellieren von periodisch auftretenden Temperaturschwankungen mittels Latentwärmespeicher.

Die Schrift EP 2 375 483 A2 offenbart ihrerseits die Verwendung von PCM's als Suspension oder Emulsion in einem Kühlmedium auf wasserfreier Basis. Dieses PCM's enthaltende Kühlmedium wird unter Nutzung der hohen Wärmekapazität der PCM's in Brennstoffzellen angewandt. Als PCM wird anorganisches Salz in einer wasserfreien Flüssigkeit beschrieben. Die EP 2 375 483 A2 offenbart zwar den Einsatz einer Dispersion mit PCM's als Kühlmedium, Hinweise oder Anregungen wie die Stabilisierung einer Brennstoffzelle bei einer Solltemperatur ausgeführt werden könnte, gibt die Schrift jedoch keine.

Die Schrift EP 0 987 799 A2 beschreibt ein passives Kühlsystem für die kurzzeitige Kühlung und thermische Stabilisierung eines Festkörperlasers. Das offenbarte Kühlsystem verwendet einen festen PCM-Kühlkörper, vergleichbar mit Kühlelementen gebräuchlicher Kühlboxen. Ein Kühlsystem mit einem festen PCM-Kühlkörper ist jedoch nur wenige Minuten funktionsfähig und gemäss dieser Schrift beispielsweise für die finale Zielführung einer Lenkwaffe einsetzbar. Für eine kontinuierlichere Operation des beschriebenen Kühlsystems, schlägt die EP 0 987 799 A2 vor den Festkörper-PCM mit einem Wärmetauscher zu kombinieren, welcher mit einer Kühlflüssigkeit arbeitet. Dadurch kann der Phasenzustand des PCM-Kühlkörpers bzw. der Anteil fest zu flüssig günstig beeinflusst werden. Die Schrift EP 0 987 799 A2 schlägt auch vor Kühlkörper aus verschiedenen PCM-Materialien zu erstellen.

Aus der Schrift US 5 141 079 ist es bekannt, Kühlschmiermittel zur Kühlung der Bearbeitungsstelle zwischen Werkzeug und Werkstück an Werkzeugmaschinen zu verwenden, welche mikroverkapselten PCM's als Komponente enthalten. Die beschriebenen Kühlschmiermittel schmieren und kühlen dabei das Werkzeug und das Werkstück an der Bearbeitungsstelle sehr wirksam. Dies dank der Wärmekapazität der PCM's, welche in der Kühlflüssigkeit enthalten sind. Das Kühlschmiermittel arbeitet hierbei in einem offenen bzw. äusseren Kühlkreislauf und dient lediglich der Kühlung der Bearbeitungsstelle des Werkstückes bzw. lediglich der Kühlung der Spitze des Fräs- oder Drehwerkzeuges.

Ausgehend von den bekannten Kühlsystemen und deren Nachteile, liegt der vorliegenden Erfindung die Aufgabe zugrunde, ein integriertes, inneres Kühlsystem für Maschinenelemente und einen geschlossenen Kühlkreislauf für entsprechende Maschinenelemente vorzuschlagen, das eine wesentlich bessere Kühlleistung besitzt, als bestehende Kühlvorrichtungen. Insbesondere soll das erfindungsgemässe Kühlsystem innerhalb definierter Betriebsparameter eine hinreichende Kühlung des Maschinenelementes mit geringem Durchfluss an Kühlmittel erlauben und eine sehr geringe oder keine Temperaturdifferenz zwischen Kühlmittelvor- und Kühlmittelrücklauf an der Wärmequelle des Maschinenelementes aufweisen. Diese Aufgabe wird durch ein Maschinenelement oder einen geschlossenen Kühlkreislauf mit den Merkmalen der Patentansprüche 1 oder 10 gelöst.

Als Dispersion wird ein Fluidgemisch bezeichnet, welches aus einer kontinuierlichen (die disperse Phase umhüllende) flüssigen Phase besteht und eine diskontinuierliche Phase enthält. Die diskontinuierliche Phase kann beispielsweise aus Feststoffpartikeln oder Fasern bestehen, wobei man in diesem Fall von einer Suspension spricht. Ist die diskontinuierliche Phase ebenfalls flüssig und besteht z.B. aus Tropfen, so spricht man von einer Emulsion. Für die vorliegende Erfindung kann das Kühlmittel PCM's in fester, wie flüssiger Form enthalten.

Dank der erfindungsgemässen Anwendung von Phase Change Materials im Kühlmittel eines integrierten, inneren Kühlsystems eines Maschinenelementes ergibt sich eine wesentlich höhere und bessere Kühlleistung als in bekannten, konventionellen Kühlvorrichtungen. Die vorteilhafte Wirkung wird im Folgenden erläutert.

Durch Verwendung einer Dispersion beispielsweise aus Wasser und einem geeigneten PCM, welches die Phasenumwandlung genau im Bereich der Soll- bzw. Betriebstemperatur des Maschinenelementes vollzieht, wird bei dieser Solltemperatur eine hohe Wärmekapazität des Kühlmittels erzielt. Dadurch kann Abwärme vom Maschinenelement durch die Dispersion mit PCMs ohne Erhöhung der KühlmittelTemperatur aufgenommen werden. Eine solche Dispersion stellt somit ein ideales Kühlmedium für isotherme Anwendungen dar. Das zu kühlende Maschinenelement kann z.B. eine Motorspindel im Fräskopf einer Werkzeugmaschine oder ein anderes Maschinenelement mit Wärmequelle sein.

Durch die gegenüber Wasser wesentlich erhöhte spezifische Wärmekapazität der PCM-Dispersion im relevanten Temperaturbereich kann im Vergleich zu Wasser einerseits mit geringeren Durchflussmengen eine erhöhte Kühlleistung und andererseits bei zudem konstanter Temperatur gekühlt werden. Dies begünstigt überdies den Wärmeübergang vom umgebenden Festkörper ins Kühlmittel, da sich die Temperaturdifferenz nicht ändert. Zudem können auch geringere Durchmesser für Kühlleitungen oder Kühlkanäle gewählt werden respektive bei bestehendem Rohrdurchmesser mehr Wärme transportiert werden.

Im Weiteren nimmt der Wärmefluss ins Kühlmittel bei steigender Temperatur der Wärmequelle zu, da das Kühlmittel selbst die Solltemperatur bzw. die Phasenumwandlungstemperatur beibehält, wodurch das treibende Temperaturgefälle steigt und wodurch die Kühlwirkung wie technisch erwünscht stärker wird.

Ein weiterer Vorteil ist, dass die Solltemperatur durch die Phasenumwandlungstemperatur des PCM sichergestellt und keine aufwändige Regelung benötigt wird. Die Regelung des Kühlsystems bzw. des Kühlkreislaufes muss lediglich gewährleisten, dass bei der Wärmesenke der latente Bereich des PCMs nicht unterschritten wird (was andererseits in bestimmten Ausführungsformen sogar erwünscht sein kann).

Im Idealfall tritt also die aus einer Dispersion, enthaltend ein PCM, bestehende Kühlmittelflüssigkeit in einem Zustand in die Wärmequelle ein, bei der nahezu alle PCM-Feststoffpartikel gefroren sind und tritt aus der Wärmequelle in dem Zustand aus, bei dem nahezu alle PCM-Partikel aufgeschmolzen sind.

In einer bevorzugten Ausführungsform, kann der Übergang des Kühlmittels zum sensiblen Verhalten am unteren Ende des Phasenumwandlungstemperaturbereiches direkt als Eingangsgrösse für die Regelung der Kühlleistung an der Wärmesenke genutzt werden. Die Wärmesenke weist hierfür eine Messvorrichtung für die Temperatur des Kühlmittels und eine Regelvorrichtung für die Einstellung der Kühlleistung an der Wärmesenke auf.
Beim Kühlen des Kühlmittels in der Wärmesenke (Rückkühler) des Kühlkreislaufes kann der latente Bereich des Kühlmittels auch zu einer tieferen Temperatur als die Phasenumwandlungstemperatur verlassen werden. Beim nachfolgenden Eintritt des Kühlmittels über die Kühlleitungen des Kühlkreislaufes in die Wärmequelle des Maschinenelementes, wird der latente Phasenumwandlungsbereich rasch wieder erreicht, so dass die (iso)thermische Stabilisierung durch die Temperatur der Phasenumwandlung aktiv ist. Die Kühlmittel-Durchströmung der Wärmequellen wird in diesem Fall vorzugsweise so ausgelegt, dass zunächst Wärmequellen gekühlt werden, die auch unterhalb der eigentlichen Soll- bzw. Betriebstemperatur gekühlt werden dürfen, und erst danach das Kühlmittel den Wärmequellen zugeführt wird, die auf ihre Soll-Betriebstemperatur gehalten bzw. gekühlt werden sollen. Die Dispersion resp. das PCM wird dabei so ausgelegt resp. gewählt, dass die Phasenumwandlungstemperatur der Solltemperatur entspricht. Bevorzugt werden PCMs ausgewählt, welche im Bereich der Phasenumwandlungstemperatur eine geringe Hysterese aufweisen und über viele Zyklen stabil bleiben.

Unter Verwendung einer solchen Dispersion mit PCM kann ein integriertes, inneres Kühlsystem eines Maschinenelementes, insbesondere für eine Bearbeitungsspindel in einer Werkzeugmaschine, oder ein geschlossener Kühlkreislauf derart ausgelegt werden, dass die entscheidenden Elemente des Maschinenelementes, wie beispielsweise die Spindellager, alle auf die gewünschten Solltemperatur respektive Phasenumwandlungstemperatur gekühlt werden können. Die Temperaturunterschiede innerhalb des Maschinenelementes bzw. Spindel können dadurch praktisch eliminiert werden, während bei einer konventionellen Lösung zwischen Vor- und Rücklauf der Maschinenelementkühlung zwangsläufig eine Temperaturdifferenz besteht. Erfindungsgemäss kann das Maschinenelement oder gewünschte Bereiche hiervon annähernd isotherm gehalten werden.

Ein besonderer Fall tritt auf, wenn die Abwärme der Wärmequelle so gross wird, dass das Kühlmittel den latenten Bereich des darin enthaltenen PCM verlässt und in den sensiblen Bereich oberhalb der Phasenumwandlungstemperatur übertritt. In diesem Fall übernimmt das Kühlmittel die Funktion eines herkömmlichen Kühlmediums, wie z.B. Wasser, und das Kühlsystem funktioniert konventionell wie herkömmliche Kühlsysteme in denen sich das Kühlmittel bei Aufnahme von Abwärme im sensiblen Bereich normal erwärmt. Da die erfindungsgemässe PCM-Dispersion, vorzugsweise in ihrer äusseren, kontinuierlichen Phase aus Wasser besteht, ist keine wesentliche Verschlechterung gegenüber herkömmlichen Kühlmedien - wie Wasser - gegeben.

In diesem Fall wird bei steigender Temperatur des Kühlmittels auch der Wärmefluss aus der Wärmequelle durch Konvektion mit der Umgebungsluft der Wärmequelle stärker. Damit ist sichergestellt, dass sich wiederum ein stabiler Zustand, wenn auch bei höherer Temperatur, ergibt. Beispielsweise ist dieser Betriebszustand ausdrücklich erlaubt, wenn hohe Drehmomente an einem Maschinenelement, wie z.B. einer Maschinenspindel, geleistet werden müssen, dabei aber keine sehr hohen Genauigkeitsanforderungen an die Werkstückbearbeitung vorliegen.
Nach Rückkehr zu geringeren Leistungen und gleichzeitig höheren Anforderungen an die Genauigkeit, wird das Kühlmittel über das Kühlsystem bzw. den Kühlkreislauf wieder - wie vorgängig beschrieben - im latenten Bereich gefahren.
Bei Bearbeitungsspindeln einer Werkzeugmaschine kann ein solcher Fall insbesondere bei Schruppbearbeitungen eintreten. Hierbei müssen hohe Drehmomente aufgebracht werden, weshalb die Spindel im oberen Leistungsbereich betrieben werden muss. Dabei entsteht vor allem in der Motorwicklung einer Motorspindel erheblich mehr Abwärme. Bei Schruppbearbeitungen sind jedoch die Ansprüche an die Genauigkeit der Bearbeitung gering, so dass eine Stabilisierung der Motorspindel auf Solltemperatur bzw. Soll-Betriebstemperatur nicht notwendig ist. Bei der in der Regel nachfolgenden Schlichtbearbeitung wird die Spindel lediglich im unteren oder mittleren Leistungsbereich betrieben, weshalb die Abwärme gering ist, das PCM-Kühlmittel wieder im latenten Bereich genutzt werden kann und wodurch das Maschinenelement bzw. Spindel auch wieder genau und isotherm auf Soll-Betriebstemperatur betrieben werden kann.

Die Kühlung des Kühlmittels in der Wärmesenke des Kühlkreislaufes bis in den sensiblen Bereich hinein, erlaubt zudem eine einfache Erkennung der unteren Grenze des latenten Phasenumwandlungstemperaturbereiches und stellt dadurch sicher, dass der oder den Wärmequellen wieder der ganze latente Bereich des Kühlmittels zur Kühlung zur Verfügung steht. Ebenfalls kann die bei Phasenwechseldispersionen zu beobachtende Neigung zur Unterkühlung abgefangen werden, dies ohne der erfindungsgemässen Anwendung zu schaden.

Da die Temperatur im unteren sensiblen Bereich des Kühlmittels mit PCMs rasch abfällt, kann dieser Übergang in den sensiblen Bereich in einer bevorzugten Ausführungsform der Erfindung durch eine Regelung einfach und kostengünstig erfasst und geregelt werden.

Aufgrund der erhöhten Wärmekapazität bei Solltemperatur bzw. Phasenumwandlungstemperatur kann ein erfindungsgemässes Kühlsystem oder Kühlkreislauf auf einen geringeren Durchfluss an Kühlmittel ausgelegt werden, wodurch es einfacher implementiert, mit einer geringeren Pumpenleistung betrieben und insgesamt kostengünstiger aufgebaut werden kann. Wobei hinzukommend die Kühlung stabiler ist und viel geringere Temperaturunterschiede in der Wärmequelle erlaubt.

Im Fall eines Betriebsunterbruchs der Maschine und einer Soll- bzw. Betriebstemperatur über oder auch unterhalb der Umgebungstemperatur, kann die hohe Wärmekapazität im latenten Bereich des Kühlmittels zur Aufrechterhaltung der Betriebstemperatur des jeweiligen Maschinenelementes genutzt werden. Der Kühlkreislauf wird hierfür weiter betrieben und das Maschinenelement hierbei auf Phasenumwandlungstemperatur des Kühlmittels gehalten, obschon der Wärmeverlust durch Rohrleitungssystem und Wärmeübertragung in die Umgebung erheblich sein kann. Mit Vorteil wird dann die Wärmesenke hierbei deaktiviert, der Kreislauf aber aufrecht erhalten, so dass die im Kühlmedium latent vorhandene Wärme für eine gewisse Zeit zur Stabilisierung der Maschinenelemente auf Solltemperatur dient. Sollte trotzdem der latente Bereich verlassen werden, und das Kühlmittel beginnen sensibel zu reagieren (d.h. Temperatur des Kühlmittels fällt unter die Phasenumwandlungstemperatur), so wird bei der Wiederaufnahme des Betriebs aufgrund der sensiblen Eigenschaften des Kühlmittels die Solltemperatur auf Phasenumwandlungstemperatur rasch wieder erreicht. Es ist deshalb auch kein Nachteil, sondern im Gegensatz ein Vorteil, wenn bei einer Kühlmittel-Dispersion mit einer äusseren Phase, beispielsweise aus Wasser, die spezifische Wärmekapazität durch die innere Phase (d.h. das PCM) im sensiblen Bereich reduziert wird. Dies ermöglicht beim Aufwärmen der Maschine bzw. des Maschinenelementes ein rasches Aufwärmen des Kühlmittels in dessen latenten Bereich hinein, d.h. ein rasches Aufwärmen auf Solltemperatur bzw. auf Phasenumwandlungstemperatur.

Weitere Vorteile der erfindungsgemässen Lösung liegen in der insgesamt einfacheren Auslegung und kleineren Dimensionierung des Kühlkreislaufes, d.h. von dessen Rohrsystem und Pumpe, sowie natürlich auch durch den geringeren Energieverbrauch des Kühlkreislaufes im Betrieb.

Das erfindungsgemässe Kühlmittel besteht aus einer Dispersion und weist vorzugsweise folgende Merkmale auf:
Erstens, die äussere Phase besteht aus einem Fluid mit niedriger Viskosität, bevorzugt 0.5 bis 1000 mPas. Das Fluid ist bevorzugt nicht leicht entzündlich, ungiftig und nicht korrosiv. Bevorzugt sind Öle, Glykole und wässrige Formulierungen. Ganz besonders bevorzugt ist Wasser. Das Fluid kann zur Konditionierung zusätzliche Additive enthalten, die z.B. die Neigung zu Korrosion und Alterung senken oder das Wachstum von Bakterien verhindern (Inhibitoren, Konservierungsstoffe).

Zweitens, die Innere Phase besteht aus einem mit der äusseren Phase nur geringfügig mischbaren Produkt. Entsprechend bevorzugt sind organische, unpolare Medien. Bevorzugt sind Paraffine, Fettsäuren und Fettsäureester.
Der Schmelzpunkt der organischen Phase hat bevorzugt einen sehr engen Schmelzbereich bei einer mittleren Temperatur, welche der geforderten Kühltemperatur bzw. Solltemperatur entspricht.

Verwendbare Paraffine sind z.B. N-Alkane mit der Summenformel CₙH₂ₙ₊₂. Bevorzugt ist dabei für das erfindungsgemässe Kühlmittel eine Mischung aus Heptadekan mit der Summenformel C₁₇H₃₆ und Octadekan mit der Summenformel C₁₈H₃₈ zu verwenden.
Als Beispiel für eine kommerziell erhältliche organische Substanz gilt das Produkt RT25 HC des Handelsunternehmens Rubitherm aus Berlin, Deutschland.
Eine Anpassung des Schmelzverhaltens und der Schmelztemperatur kann durch gezielte Zugabe von höherwertigen Alkoholen vorgenommen werden.

Drittens, das Emulgatorsystem bestehend aus oberflächenaktiven Substanzen, die eine Stabilisierung der Dispersion sicherstellen. Bevorzugt sind für Paraffin-Dispersionen Emulgatorsysteme, die einen HLB Wert (Hydrophilic-Lipophilic Balance) von 8 bis 15 aufweisen. Bevorzugt sind dabei auch Mischungen der folgenden Stoffe: Sorbitanstearat, Sorbitan Monooleat, Glycerolmonostearat, und teiletoxylierte Alkohole.

Bevorzugt wird für die erfindungsgemässe Ausführung eine Auswahl zweier Emulgatoren verwendet, von denen einer bei möglichst genau der gewünschten Soll- bzw. Kühltemperatur einen Phasenwechsel fest-flüssig aufweist und der andere einen leicht höheren Schmelzpunkt aufweist. Ein besonders bevorzugter Emulgator stellt hier Polyoxyethylen-Sorbitan-Monostearate dar. Erhältlich ist dieser Emulgator bei ICI unter dem Handelsnamen Tween 60 oder bei der Kolb AG unter dem Handelsnamen Kotilen-S/1.
Ebenfalls bevorzugt ist Polyoxyethylen (6) Cetylstearylether, erhältlich unter dem Handelsnamen Cremophor A6 bei der der BASF AG oder unter dem Handelsnamen Imbentin-AG/168S/060 bei der Kolb AG.

Viertens, die disperse Phase kann weitere Komponenten enthalten, insbesondere solche, die zur Reduktion der Unterkühlung dienen. Bevorzugt sind höherschmelzende organische, unpolare Substanzen. Ziel ist es zu erreichen, dass die höherschmelzende Komponente in geringer Konzentration innerhalb des Betriebsbereichs (Solltemperatur) immer gefroren vorliegt und somit einen Keim für die Kristallbildung der eigentlichen dispersen Phase darstellt.
Vorzugsweise werden, anders als in der Literatur vorgeschlagen, hierfür keine sehr ähnlichen Substanzen gewählt. Vorzugsweise also keine langkettigen n-Alkane, wenn die disperse Phase hauptsächlich aus kurzkettigen n-Alkanen besteht. Grund: Dabei besteht die Gefahr, dass eine Mischwirkung zur Erhöhung der Schmelztemperatur der eigentlichen dispersen Phase führt und/oder zur Absenkung der Schmelztemperatur der als Kristallisationskeim gedachten Substanz führt. Vorzugsweise werden hier höherschmelzende Substanzen aus der Klasse der Fettsäuren, Fettsäureestern gewählt. Beispielsweise eigenen sich Palmitinsäure oder Myristinsäure.

Ein erfindungsgemässer geschlossener Kühlkreislauf ist schematisch gleich aufgebaut wie der Kühlkreislauf 24 aus der Figur 1, unterscheidet sich jedoch einerseits am verwendeten, erfindungsgemässen Kühlmittel und andererseits an speziellen Mess-, Regel- und Fördermitteln. Wie im Folgenden ausgeführt werden wird, können beispielsweise an der Kühleinrichtung, der Zirkulationspumpe, an Messeinrichtungen für den Förderdruck oder der Kühlmitteltemperatur - welche an verschiedenen Stellen gemessen werden können - Unterschiede zu herkömmlichen Kühlsystemen bestehen.
Bei der Erfindung wird die Kühlmitteltemperatur vorzugsweise sowohl am Kühlmittelzufluss, wie auch am Kühlmittelabfluss des Maschinenelementes - z.B. Motorspindel oder sonstiger elektromechanischer Antrieb - gemessen, sowie auch am Eingang, am Ausgang oder an verschiedenen Stellen innerhalb des Rückkühlers (Wärmesenke).

Im Folgenden werden die Erfindung und der Erfindungsgedanke anhand von schematischen Figuren erläutert. Gezeigt werden auch verschiedene Ausführungsformen. Es soll aber ausdrücklich darauf hingewiesen werden, dass sich die Erfindung bzw. der Erfindungsgedanke nicht auf diese erläuterten Beispiele beschränken.

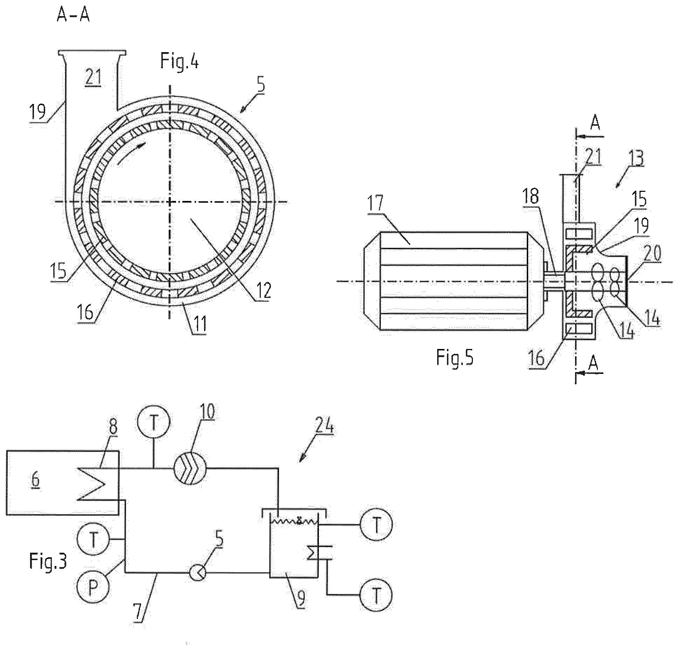

Die schematische Darstellung in Figur 3 zeigt eine bevorzugte Ausführungsform des erfindungsgemässen geschlossenen Kühlkreislaufes 24. Dieser weist eine Kühlmittelpumpe 5 - z.B. eine Zirkulationspumpe - zum Fördern des Kühlmediums in Kühlleitungen 7 auf, welche bevorzugt in Kühlmittel-Fliessrichtung vor dem Maschinenelement 6 - z.B. Maschinenspindel - angeordnet ist. Der Förder-Volumenstrom hängt von der erforderlichen Kühlleistung für das innere Kühlsystem 8 des zu kühlenden Maschinenelementes 6 ab. Für die Erfindung werden vorzugsweise Zirkulationspumpen verwendet. Förderleistungen von 1 bis 15 l/min, bevorzugt 4 bis 10 l/min. sind denkbar.
Derartige Zirkulationspumpen 5 sind bevorzugt drehzahlvariabel ausgeführt, um gemäss geforderter Leistung angepasste Volumenströme bereitzustellen.
Der durch die Zirkulationspumpe zu erbringende Arbeitsdruck (Austrittsdruck aus der Pumpe = Eintrittsdruck in das Maschinenelement bzw. Motorspindel) kann in einer bevorzugten Ausführungsform der Erfindung mittels einer Druckmesseinrichtung gemessen und geregelt werden. Der Druck ist dabei eine Funktion der Viskosität des Kühlmittels und des Volumenstroms und folgt üblicherweise der bauartspezifischen Pumpenkennlinie. Grundsätzlich steigt mit zunehmendem Volumenstrom der Druck an, da mit erhöhter Strömungsgeschwindigkeit des Kühlmittels in den Kühlleitungen und in dem zu kühlenden Maschinenelement der Strömungswiderstand steigt.
Vorteilhaft ist entsprechend ein angepasster Volumenstrom, der einerseits die hinreichende Kühlung des Maschinenelementes 6 bzw. der Maschinenspindel mittels innerem Kühlsystems 8 gewährleistet, ansonsten aber nicht unnötig gross ist.

Sind grössere Volumenströme notwendig mit daraus resultierenden, höheren Drücken, so wird die Drehzahl der Kühlmittelpumpe 5 erhöht. Für die Erfindung werden Pumpen mit einfacher Bauweise bevorzugt, wie z.B. Kreiselpumpen.
Nur ein Teil der elektrischen Energie des Motors der Zirkulationspumpe kann tatsächlich in Volumenarbeit (Druck und Volumenstrom) umgewandelt werden. Ein erheblicher Teil der Pumparbeit wird dissipiert, d.h. verlässt als Abwärme im Kühlmittel die Pumpe 5. Die Dissipation bzw. Abwärme entsteht während des Pumpvorganges durch Scherkräfte und Reibung im Kühlmittel selbst, vornehmlich am Laufrad und an den Leiteinrichtungen innerhalb der Pumpe 5.

Im Zusammenhang mit der Anforderung an die Stabilität der Emulsion ist es nun vorteilhaft, die Zirkulationspumpe 5 derart zu gestalten, dass die Art und der Ort der entstehenden Scherkräfte derart ist, dass eine Dispergierung der Emulsion stattfindet. Allfällige Störungen der Emulsion, wie zum Beispiel ein Tropfenwachstum, können beim Durchlauf des Kühlmittels 4 durch die Pumpe 5 wieder behoben werden. Die Höhe der notwendigen Scherkräfte hängt von der allgemeinen Stabilität der Emulsion und insbesondere dem Emulgatorsystem ab.

In einer bevorzugten Ausführungsform der Erfindung wird dem zu kühlenden Maschinenelement 6 eine Dispergiereinheit 10 nachgeschaltet (siehe Figur 3). In einer Variante hiervon besitzt die Dispergiereinheit 10 eine Pumpstufe und eine Dispergierstufe (gemäss Figur 5).

Bevorzugt ist die Zirkulationspumpe 5 unverändert zu heutigen Standardausführungen ausgestaltet und die üblicherweise auftretenden Scherkräfte sind ausreichend um ein effektives Redispergieren zu gewährleisten.

In einer weiteren in Figur 4 dargestellten Variante ist die Zirkulationspumpe 5 bzw. dessen Pumpgehäuse 19 mit einem Stator 11 mit Zahnkranz 16 und einem darin rotierenden Rotor 12 mit Rotorkranz 15 ausgeführt. Der Zahnkranz 16 des Stators 11 ist auch an der Austrittseite 21 der Pumpe 5 ausgeführt, so dass auch erhöhte Scherkräfte am Austritt aus der Pumpe entstehen.

In einer ganz besonders bevorzugten und in Figur 5 dargestellten Variante, wird als Pumpe eine speziell für diese Anwendung optimierte Kreiselpumpe 13 verwendet: Diese Kreiselpumpe 13 besitzt einen mehrstufige Pumpflügel 14, welcher das eigentliche Rotorrad 12 der Kreiselpumpe 13 ergänzt. Dieses Rotorrad 12 besitzt einen Rotorkranz 15. Der Rotorzahnkranz 15 ist konzentrisch in einem Statorkranz 16 drehend angeordnet. Der Aussendurchmesser des Rotors 12 und der Innendurchmesser des aussenliegenden Stators 11 unterscheiden sich kaum, so dass ein enger Scherspalt realisiert wird. Bevorzugt wird ein Spalt von 0.5 bis 1 mm und damit ein Unterschied im Durchmesser von Rotor 12 und Stator 11 von 1 bis 2 mm vorgesehen. Der zu wählende Aussendurchmesser des Rotors 12 hängt von der Drehzahl der Pumpe 13 ab. Er ist vorzugsweise so gewählt, dass die Relativgeschwindigkeit des Rotors 12 gegenüber dem Stator 11 zwischen 5 m/s und 40 m/s liegt. Um die freigesetzte Energie nicht zu gross werden zu lassen, wird bevorzugt eine Relativgeschwindigkeit von 5 bis 15 m/s eingesetzt.
Wie in Figur 5 schematisch dargestellt, wird die Kreiselpumpe 13 von einem Antrieb 17 (Elektromotor) angetrieben, welche über eine Antriebswelle 18 den Rotor 12 und die mehrstufigen Pumpflügel 14 antreibt. Weiter dargestellt sind das Pumpengehäuse 19, der Pumpeneinlass 20 und der Pumpenauslass 21 der Kreiselpumpe.

### Legende

- 1: Kühlkompressor
- 2: Temperaturwächter
- 3: Strömungswächter
- 4: Kühlmittel, Kühlmedium, PCM
- 5: Kühlmittelpumpe, Zirkulationspumpe
- 6: Maschinenelement, Motorspindel
- 7: Kühlleitungen
- 8: Integriertes, inneres Kühlsystem bzw. eingebaute Spindelkühlvorrichtung
- 9: Wärmesenke, Kühlvorrichtung
- 10: Dispergiereinheit
- 11: Stator
- 12: Rotor
- 13: Kreiselpumpe
- 14: mehrstufige Pumpflügel
- 15: Rotorkranz
- 16: Statorkranz
- 17: Antrieb bzw. Motor Kreiselpumpe
- 18: Antriebswelle
- 19: Pumpgehäuse
- 20: Pumpeneinlass, Eintrittsseite Pumpe
- 21: Pumpenauslass, Austrittseite Pumpe
- 22: Kühlmittelzufluss
- 23: Kühlmittelabfluss
- 24: geschlossener Kühlkreislauf

## Patentansprüche

1. Maschinenelement (6), insbesondere Motorspindel oder elektromechanische Antriebseinheit, mit integriertem, inneren Kühlsystem (8), wobei das Maschinenelement (6) mindestens eine Wärmequelle aufweist, welche mittels eines durch Kühlleitungen des integrierten, inneren Kühlsystems (8) fliessenden Kühlmittels (4) gekühlt werden kann, wobei das im Maschinenelement (6) integrierte, innere Kühlsystem (8) mindestens einen Kühlmittelzufluss (22) und mindestens einen Kühlmittelabfluss (23) aufweist,
und das Kühlmittel (4) eine Dispersion ist, welche mindestens ein Phase Change Material (PCM) enthält, **dadurch gekennzeichnet, dass** das integrierte, innere Kühlsystem (8) derart aufgelegt ist, dass das Kühlsystem (8) in einem unteren und mittleren Leistunasbereich des Maschinenelementes (6) eine Kühlung des Maschinenelementes (6) auf eine Solltemperatur gewährleistet, die im Phasenumwandlungstemperaturbereich fest-flüssi des im Kühlmittel (4) enthaltenen Phase Change Materials (PCM) ist, und bei Überschreiten, des mittleren Leistungsbereiches des Maschinenelementes (6) das Kühlsystem (8) das Maschinenelement durch Erwärmung des Kühlmittels (4) im sensiblen Bereich oberhalb des Phasenumwandlungstemperaturbereiches kühlt.

2. Maschinenelement (6) mit integriertem, inneren Kühlsystem (8) gemäss Anspruch 1, **dadurch gekennzeichnet, dass**
die Dispersion aus einer wässrigen kontinuierlichen Phase und einer organischen diskontinuierlichen Phase besteht, wobei die diskontinuierliche Phase aus dem Phase Change Material (PCM) besteht, welche einen Phasenwechsel fest-flüssig in einem Phasenumwandlungstemperaturbereich von 18 bis 28 °C, vorzugsweise in einem Phasenumwandlungstemperaturbereich von 21 bis 25 °C, besonders bevorzugt bei einer Phasenumwandlungstemperatur von 24°C vollzieht.

3. Maschinenelement (6) mit integriertem, inneren Kühlsystem (8) gemäss einem der vorangehenden Ansprüche, **dadurch gekennzeichnet, dass** die äussere Phase der Dispersion aus einem Fluid mit niedriger Viskosität, bevorzugt 0.5 bis 1000 mPas, besteht, wobei die äussere Phase vorzugsweise aus einem Öl, einem Glykol oder einer wässrigen Formulierung, besonders bevorzugt aus Wasser, besteht und vorzugsweise auch Additive, wie Inhibitoren, Konservierungsstoffe enthält, welche die Neigung zu Korrosion und Alterung oder das Wachstum von Bakterien vermindern.

4. Maschinenelement (6) mit integriertem, inneren Kühlsystem (8) gemäss einem der vorangehenden Ansprüche, **dadurch gekennzeichnet, dass** die innere, diskontinuierliche Phase der Dispersion, welche das Phase Change Material (PCM) darstellt, aus
einem organischen, unpolaren Medium, bevorzugt ein Paraffin, eine Fettsäure oder ein Fettsäureester, besteht und
das organische, unpolare Medium bevorzugt einen sehr engen Schmelzpunkt bzw. eine Phasenumwandlungstemperatur aufweist, welcher bei der geforderten Kühltemperatur des Maschinenelementes liegt, wobei der Schmelzpunkt des organischen, unpolaren Mediums vorzugsweise in einem Temperaturbereich von 18 bis 28 °C, besonders bevorzugt 21 bis 25 °C liegt.

5. Maschinenelement (6) mit integriertem, inneren Kühlsystem (8) gemäss einem der vorangehenden Ansprüche, **dadurch gekennzeichnet, dass** das Phase Change Material (PCM) aus einer oder aus einer Kombination der folgenden Substanzen besteht:
- Paraffine mit der Summenformel CₙH₂ₙ₊₂, vorzugsweise
- Heptadekan mit der Summenformel C₁₇H₃₆ oder
- Octadekan mit der Summenformel C₁₈H₃₈.

6. Maschinenelement (6) mit integriertem, inneren Kühlsystem (8) gemäss einem der vorangehenden Ansprüche, **dadurch gekennzeichnet, dass** die Kühlmittel-Dispersion zur Stabilisierung ein Emulgatorsystem aus oberflächenaktiven Substanzen enthält,
bevorzugt wird ein Emulgatorsystem verwendet, der einen HLB Wert (Hydrophilic-Lipophilic Balance) von 8 bis 15 aufweist,
besonders bevorzugt enthält das Emulgatorsystem eine oder eine Mischung von mindestens zwei der folgenden Stoffe:
- Sorbitanstearat,
- Sorbitan Monooleat,
- Glycerolmonostearat,
- Teiletoxylierte Alkohole.

7. Maschinenelement (6) mit integriertem, inneren Kühlsystem (8) gemäss dem vorangehenden Anspruch 6, **dadurch gekennzeichnet, dass** das Emulgatorsystem zwei Emulgatoren enthält, wobei
einer der beiden Emulgatoren nahe oder im Phasenumwandlungstemperaturbereich des Phase Change Materials selbst einen Phasenwechsel fest-flüssig vollzieht und
der andere Emulgator einen leicht höheren Schmelzpunkt aufweist, vorzugsweise ist einer der beiden Emulgatoren ein Polyoxyethylen-Sorbitan-Monostearat oder ein Polyoxyethylen (6) Cetylstearylether.

8. Maschinenelement (6) mit integriertem, inneren Kühlsystem (8) gemäss einem der vorangehenden Ansprüche, **dadurch gekennzeichnet, dass** die Kühlmittel-Dispersion weitere Komponenten mit einer Schmelztemperatur enthält, welche oberhalb der Phasenumwandlungstemperatur des Phase Change Material (PCM) liegt,
vorzugweise sind diese Komponenten organische, unpolare Substanzen aus der Klasse der Fettsäuren oder der Fettsäureestern,
besonders bevorzugt werden hierfür Palmitinsäure oder Myristinsäure.

9. Maschinenelement (6) mit integriertem, inneren Kühlsystem (8) nach einem der vorangehenden Ansprüche, **dadurch gekennzeichnet, dass** das Maschinenelement (6) eine Bearbeitungsspindel einer Werkzeugmaschine ist.

10. Geschlossener Kühlkreislauf (24) enthaltend ein Maschinenelement (6) mit integriertem, inneren Kühlsystem (8) gemäss einem der vorangehenden Ansprüche, **dadurch gekennzeichnet, dass** der Kühlkreislauf (24) mindestens eine Pumpe (5) und mindestens eine Wärmesenke (9) aufweist, welche dem Kühlmittel (4) Wärme entzieht, wobei der Kühlkreislauf (24) über Kühlleitungen (7), vorzugsweise Rohrleitungen, mit dem Kühlmittelzufluss (22) und dem Kühlmittelabfluss (23) des Maschinenelements (6) derart verbunden ist, dass der Kühlkreislauf geschlossen ausgebildet ist.

11. Geschlossener Kühlkreislauf (24) enthaltend ein Maschinenelement (6) mit integriertem, inneren Kühlsystem (8) gemäss dem vorangehenden Anspruch 10, **dadurch gekennzeichnet, dass** die Wärmesenke (9) das Kühlmittel (4) beim Wärmeaustausch so stark abkühlen kann, dass das Kühlmittel (4), welches mindestens ein Phase Change Material (PCM) enthält, den sensiblen Bereich unterhalb der Phasenumwandlungstemperatur der Dispersion erreicht, vorzugsweise weist der geschlossener Kühlkreislauf (24) hierfür eine Regel- und Temperaturmessvorrichtung (2, 3) an der Wärmesenke (9) auf um die Kühlmitteltemperatur konstant zu halten.

12. Geschlossener Kühlkreislauf (24) enthaltend ein Maschinenelement (6) mit integriertem, inneren Kühlsystem (8) gemäss Anspruch 10 oder 11, **dadurch gekennzeichnet, dass** das Kühlmittel (4) nach der Kühlung in der Wärmesenke (9) über den Kühlmittelzufluss (22) in das innere Kühlsystem (8) des Maschinenelement (6) fliesst und zuerst eine Wärmequelle kühlt, welche zumindest teilweise auf eine Temperatur unterhalb der Phasenumwandlungstemperatur der Dispersion gekühlt werden darf, wobei das Kühlmittel (4) bei Austritt aus dieser Wärmequelle vorzugsweise die Phasenumwandlungstemperatur erreicht hat.

13. Geschlossener Kühlkreislauf (24) enthaltend ein Maschinenelement (6) mit integriertem, inneren Kühlsystem (8) gemäss einem der vorangehenden Ansprüche 10 bis 12, **dadurch gekennzeichnet, dass** der geschlossene Kühlkreislauf (24) und das innere Kühlsystem (8) des Maschinenelementes (6) so ausgelegt sind, dass bei einem Betriebsunterbruch des Maschinenelementes (6) die Wärmesenke (9) des geschlossenen Kühlkreislaufes (24) deaktiviert werden kann und die im Kühlmittel (4) gespeicherte latente Wärmeenergie die Beibehaltung der Temperatur des Maschinenelementes (6) auf Phasenumwandlungstemperatur verlängert.

14. Geschlossener Kühlkreislauf (24) enthaltend ein Maschinenelement (6) mit integriertem, inneren Kühlsystem (8) gemäss einem der vorangehenden Ansprüche 10 bis 13, **dadurch gekennzeichnet, dass** die Pumpe (5) des Kühlkreislaufes (24) so ausgelegt ist dass die Pumpe (5) für eine gleichbleibende Vermischung der Dispersion im Kühlmittel (4) sorgt.

15. Geschlossener Kühlkreislauf (24) enthaltend ein Maschinenelement (6) mit integriertem, inneren Kühlsystem (8) gemäss einem der vorangehenden Ansprüche 10 bis 14, **dadurch gekennzeichnet, dass** die Pumpe (5) des Kühlkreislaufes (24) konstruktiv so ausgelegt ist, dass die Pumpe (5) die Emulgation von flüssigen Bestandteilen der Kühlmittelemulsion oder ein Redispergieren der diskontinuierlichen Phase der Kühlmittelsuspension fördert.

16. Geschlossener Kühlkreislauf (24) enthaltend ein Maschinenelement (6) mit integriertem, inneren Kühlsystem (8) gemäss einem der vorangehenden Ansprüche 10 bis 15, **dadurch gekennzeichnet, dass** die, bevorzugt drehzahlvariable, Pumpe (5) eine Zirkulationspumpe ist, welche vorzugsweise in Kühlmittel-Fliessrichtung vor dem zu kühlenden Maschinenelement (6) angeordnet ist, bevorzugt beträgt die Kühlmittel-Förderleistung der Pumpe (5) 1 bis 15 l/min, besonders bevorzugt 4 bis 10 l/min.

17. Geschlossener Kühlkreislauf (24) enthaltend ein Maschinenelement (6) mit integriertem, inneren Kühlsystem (8) gemäss einem der vorangehenden Ansprüche 10 bis 16, **dadurch gekennzeichnet, dass** die Pumpe (5) als Stator (11) mit Statorkranz (16) mit einem sich darin drehenden Rotor (12) mit Rotorkranz (15) ausgeführt ist, wobei sich der Aussendurchmesser von Rotor (12) und der Innendurchmesser vom Stator (11) weniger als 4 mm, bevorzugt 1 bis 2 mm, unterscheiden,
vorzugsweise erstreckt sich der Statorkranz (16) auch im Bereich des Pumpenauslasses (21) der Pumpe (5),
besonders bevorzugt ist die Pumpe (5) als Kreiselpumpe (13) ausgeführt und weist zusätzlich einen mehrstufigen Pumpflügel (14) auf.

18. Geschlossener Kühlkreislauf (24) enthaltend ein Maschinenelement (6) mit integriertem, inneren Kühlsystem (8) gemäss einem der vorangehenden Ansprüche 10 bis 17, **dadurch gekennzeichnet, dass** dem Maschinenelement (6) eine Dispergiereinheit (10) nachgeschaltet ist, vorzugsweise besitzt die Dispergiereinheit (10, 13) eine Pumpstufe und eine Dispergierstufe.

19. Geschlossener Kühlkreislauf (24) enthaltend ein Maschinenelement (6) mit integriertem, inneren Kühlsystem (8) gemäss Anspruch 18, **dadurch gekennzeichnet, dass** die Dispergiereinheit (10) in der Wärmesenke (9) integriert ist, vorzugsweise ist die Dispergiereinheit (10) in einem Vorlagebehälter vor dem Kühlmitteltank der Wärmesenke (9) oder im Kühlmitteltank der Wärmesenke (9) selbst eingebaut.

20. Geschlossener Kühlkreislauf (24) enthaltend ein Maschinenelement (6) mit integriertem, inneren Kühlsystem (8) gemäss einem der vorangehenden Ansprüche 10 bis 19, **dadurch gekennzeichnet, dass**
der geschlossene Kühlkreislauf (24) so ausgelegt ist, dass zwischen dem Kühlmittelzufluss (22) und dem Kühlmittelabfluss (23) des Kühlmittels (4) an der Wärmequelle des Maschinenelementes (6) eine Temperaturdifferenz von weniger als 1 K auftritt.

21. Werkzeugmaschine, vorzugsweise eine Fräs- oder Drehmaschine, enthaltend mindestens ein Maschinenelement (6) mit integriertem, inneren Kühlsystem (8) gemäss einem der Ansprüche 1 bis 9.

22. Werkzeugmaschine gemäss vorangehendem Anspruch 21, **dadurch gekennzeichnet, dass** die Werkzeugmaschine einen geschlossenen Kühlkreislauf (24) gemäss einem der Ansprüche 10 bis 20 aufweist.

## Claims

1. Machine element (6), in particular a motor spindle or an electromechanical drive unit, with integrated, internal cooling system (8), wherein the machine element (6) has at least one heat source, which can be cooled by means of a coolant (4) flowing through cooling lines of the integrated, internal cooling system (8), wherein the internal cooling system (8) integrated in the machine element (6) has at least one coolant inflow (22) and at least one coolant outflow (23),
and the coolant (4) is a dispersion containing at least one Phase Change Material (PCM),
**characterized in that**
the integrated, internal cooling system (8) is designed such that the cooling system (8), in a lower and medium performance range of the machine element (6), guarantees a cooling of the machine element (6) to a target temperature which is in the solid-liquid phase transition temperature range of the Phase Change Material (PCM) contained in the coolant (4), and if the medium performance range of the machine element (6) is exceeded, the cooling system (8) cools the machine element by warming of the coolant (4) in the sensitive region above the phase transition temperature range.

2. Machine element (6) with integrated, internal cooling system (8) according to Claim 1, **characterized in that**
the dispersion consists of an aqueous continuous phase and an organic discontinuous phase, wherein the discontinuous phase consists of the Phase Change Material (PCM), which performs a solid-liquid phase change in a phase transition temperature range from 18 to 28 °C, preferably in a phase transition temperature range from 21 to 25 °C, particularly preferably at a phase transition temperature of 24°C.

3. Machine element (6) with integrated, internal cooling system (8) according to one of the preceding claims, **characterized in that** the outer phase of the dispersion consists of a fluid with low viscosity preferably 0.5 to 1000 mPas, wherein the outer phase preferably consists of an oil, a glycol or an aqueous formulation, particularly preferably of water, and preferably also contains additives, such as inhibitors, preservatives, which lessen the tendency to corrosion and ageing or reduce the growth of bacteria.

4. Machine element (6) with integrated, internal cooling system (8) according to one of the preceding claims, **characterized in that** the inner, discontinuous phase of the dispersion, which constitutes the Phase Change Material (PCM), consists of
an organic, non-polar medium, preferably a paraffin, a fatty acid or a fatty acid ester, and the organic, non-polar medium preferably has a very narrow melting point, or a phase transition temperature, which lies at the required cooling temperature of the machine element, wherein the melting point of the organic, non-polar medium preferably lies in a temperature range from 18 to 28 °C, particularly preferably 21 to 25 °C.

5. Machine element (6) with integrated, internal cooling system (8) according to one of the preceding claims, **characterized in that** the Phase Change Material (PCM) consists of one of or a combination of the following substances:
- paraffins having the empirical formula CₙH₂ₙ+₂, preferably
- heptadecane having the empirical formula C₁₇H₃₆ or
- octadecane having the empirical formula C₁₈H₃₈.

6. Machine element (6) with integrated, internal cooling system (8) according to one of the preceding claims, **characterized in that** the coolant dispersion contains for the stabilization an emulsifier system of surface-active substances, preferably, an emulsifier system having an HLB value (Hydrophilic-Lipophilic Balance) of 8 to 15 is used, particularly preferably, the emulsifier system contains one, or a mix of at least two of the following substances:
- sorbitan stearate,
- sorbitan monooleate,
- glyceryl monostearate,
- partially ethoxylated alcohols.

7. Machine element (6) with integrated, internal cooling system (8) according to the preceding Claim 6, **characterized in that** the emulsifier system contains two emulsifiers, wherein
one of the two emulsifiers, close to or in the phase transition temperature range of the Phase Change Material, itself performs a solid-liquid phase change, and
the other emulsifier has a slightly higher melting point, preferably one of the two emulsifiers is a polyoxyethylene sorbitan monostearate or a polyoxyethylene (6) cetyl stearyl ether.

8. Machine element (6) with integrated, internal cooling system (8) according to one of the preceding claims, **characterized in that** the coolant dispersion contains further components having a melting temperature which lies above the phase transition temperature of the Phase Change Material (PCM), these components are preferably organic, non-polar substances from the class of fatty acids or fatty acid esters, palmitic acid or myristic acid is particularly preferred for this purpose.

9. Machine element (6) with integrated, internal cooling system (8) according to one of the preceding claims, **characterized in that** the machine element (6) is a machining spindle of a machine tool.

10. Closed cooling circuit (24) containing a machine element (6) with integrated, internal cooling system (8) according to one of the preceding claims,
**characterized in that** the cooling circuit (24) has at least one pump (5) and at least one heat sink (9), which extracts heat from the coolant (4), wherein the cooling circuit (24) is connected via cooling lines (7), preferably pipelines, to the coolant inflow (22) and the coolant outflow (23) of the machine element (6) such that the cooling circuit is of closed configuration.

11. Closed cooling circuit (24) containing a machine element (6) with integrated, internal cooling system (8) according to the preceding Claim 10, **characterized in that** the heat sink (9) can cool the coolant (4) so strongly in the course of the heat exchange that the coolant (4), which contains at least one Phase Change Material (PCM) reaches the sensitive region beneath the phase transition temperature of the dispersion, preferably the closed cooling circuit (24) has for this purpose a regulating and temperature measuring apparatus (2, 3) at the heat sink (9) in order to keep the coolant temperature constant.

12. Closed cooling circuit (24) containing a machine element (6) with integrated, internal cooling system (8) according to Claim 10 or 11, **characterized in that** the coolant (4), following cooling in the heat sink (9), flows via the coolant inflow (22) into the internal cooling system (8) of the machine element (6) and firstly cools a heat source, which may at least partially be cooled to a temperature beneath the phase transition temperature of the dispersion, wherein the coolant (4), upon exit from this heat source, has preferably reached the phase transition temperature.

13. Closed cooling circuit (24) containing a machine element (6) with integrated, internal cooling system (8) according to one of the preceding Claims 10 to 12, **characterized in that** the closed cooling circuit (24) and the internal cooling system (8) of the machine element (6) are designed such that, in the event of a stoppage of the machine element (6), the heat sink (9) of the closed cooling circuit (24) can be deactivated and the latent thermal energy stored in the coolant (4) prolongs the maintenance of the temperature of the machine element (6) at phase transition temperature.

14. Closed cooling circuit (24) containing a machine element (6) with integrated, internal cooling system (8) according to one of the preceding Claims 10 to 13, **characterized in that** the pump (5) of the cooling circuit (24) is designed such that the pump (5) ensures a constant mix of the dispersion in the coolant (4).

15. Closed cooling circuit (24) containing a machine element (6) with integrated, internal cooling system (8) according to one of the preceding Claims 10 to 14, **characterized in that** the pump (5) of the cooling circuit (24) is constructively designed such that the pump (5) promotes the emulsification of liquid components of the coolant emulsion or a redispersion of the discontinuous phase of the coolant suspension.

16. Closed cooling circuit (24) containing a machine element (6) with integrated, internal cooling system (8) according to one of the preceding Claims 10 to 15, **characterized in that** the, preferably variable-speed, pump (5) is a circulation pump, which is preferably disposed, in the direction of flow of the coolant, before the machine element (6) to be cooled, the coolant delivery rate of the pump (5) amounting to 1 to 15 l/min, particularly preferably 4 to 10 l/min.

17. Closed cooling circuit (24) containing a machine element (6) with integrated, internal cooling system (8) according to one of the preceding Claims 10 to 16, **characterized in that** the pump (5) is embodied as a stator (11) with stator rim (16) having a therein rotating rotor (12) with rotor rim (15), wherein the outer diameter of the rotor (12) and the inner diameter of the stator (11) differ by less than 4 mm, preferably 1 to 2 mm,
the stator rim (16) preferably extends also in the region of the pump outlet (21) of the pump (5), particularly preferably the pump (5) is embodied as a centrifugal pump (13) and additionally has a multistage pump vane (14).

18. Closed cooling circuit (24) containing a machine element (6) with integrated, internal cooling system (8) according to one of the preceding Claims 10 to 17, **characterized in that** a dispersing unit (10) is connected downstream of the machine element (6), the dispersing unit (10, 13) preferably possessing a pumping stage and a dispersing stage.

19. Closed cooling circuit (24) containing a machine element (6) with integrated, internal cooling system (8) according to Claim 18, **characterized in that** the dispersing unit (10) is integrated in the heat sink (9), the dispersing unit (10) preferably being itself installed in a storage container in front of the coolant tank of the heat sink (9) or in the coolant tank of the heat sink (9).

20. Closed cooling circuit (24) containing a machine element (6) with integrated, internal cooling system (8) according to one of the preceding Claims 10 to 19, **characterized in that**
the closed cooling circuit (24) is designed such that between the coolant inflow (22) and the coolant outflow (23) of the coolant (4) at the heat source of the machine element (6), a temperature difference of less than 1K arises.

21. Machine tool, preferably a milling or turning machine, containing at least one machine element (6) with integrated, internal cooling system (8) according to one of Claims 1 to 9.

22. Machine tool according to preceding Claim 21, **characterized in that** the machine tool has a closed cooling circuit (24) according to one of Claims 10 to 20.

## Revendications

1. Composant de machine (6), en particulier broche de moteur ou unité d'entraînement électromécanique, avec un système de refroidissement intérieur intégré (8), dans lequel le composant de machine (6) présente au moins une source de chaleur, qui peut être refroidie au moyen d'un agent réfrigérant (4) s'écoulant à travers des conduites de refroidissement du système de refroidissement intérieur intégré (8), dans lequel le système de refroidissement intérieur intégré (8) dans le composant de machine (6) présente au moins une arrivée d'agent réfrigérant (22) et au moins une évacuation d'agent réfrigérant (23), et l'agent réfrigérant (4) est une dispersion, qui contient au moins un matériau à changement de phase (PCM), **caractérisé en ce que** le système de refroidissement intérieur intégré (8) est conçu de telle manière que le système de refroidissement (8) garantisse dans un domaine de puissance inférieur et moyen du composant de machine (6) un refroidissement du composant de machine (6) à une température de consigne, qui se situe dans le domaine de température de la transformation de phase solide-liquide du matériau à changement de phase (PCM) contenu dans l'agent réfrigérant (4), et qu'en cas de dépassement du domaine de puissance moyen du composant de machine (6) le système de refroidissement (8) refroidisse le composant de machine par chauffage de l'agent réfrigérant (4) dans le domaine sensible au-dessus du domaine de température de la transformation de phase.

2. Composant de machine (6) avec un système de refroidissement intérieur intégré (8) selon la revendication 1, **caractérisé en ce que** la dispersion se compose d'une phase aqueuse continue et d'une phase organique discontinue, dans lequel la phase discontinue se compose du matériau à changement de phase (PCM), qui accomplit un changement de phase solide-liquide dans un domaine de température de transformation de phase de 18 à 28°C, de préférence dans un domaine de température de transformation de phase de 21 à 25°C, et de préférence encore à une température de transformation de phase de 24°C.

3. Composant de machine (6) avec un système de refroidissement intérieur intégré (8) selon l'une quelconque des revendications précédentes, **caractérisé en ce que** la phase extérieure de la dispersion se compose d'un fluide à faible viscosité, de préférence 0,5 à 1000 mPas, dans lequel la phase extérieure se compose de préférence d'une huile, d'un glycol ou d'une formulation aqueuse, de préférence encore d'eau, et contient de préférence aussi des additifs, comme des inhibiteurs, des agents de conservation, qui réduisent la tendance à la corrosion et au vieillissement ou la croissance de bactéries.

4. Composant de machine (6) avec un système de refroidissement intérieur intégré (8) selon l'une quelconque des revendications précédentes, **caractérisé en ce que** la phase intérieure discontinue de la dispersion, qui représente le matériau à changement de phase (PCM), se compose d'un milieu organique non polaire, de préférence une paraffine, un acide gras ou un ester d'acide gras, et le milieu organique, non polaire présente de préférence un point de fusion très étroit ou une température de transformation de phase, qui se situe à la température de refroidissement requise du composant de machine, dans lequel le point de fusion du milieu organique non polaire se situe de préférence dans une plage de température de 18 à 28°C, de préférence encore de 21 à 25°C.

5. Composant de machine (6) avec un système de refroidissement intérieur intégré (8) selon l'une quelconque des revendications précédentes, **caractérisé en ce que** le matériau à changement de phase (PCM) se compose d'une ou d'une combinaison des substances suivantes:
- paraffine de formule brute CₙH₂ₙ₊₂, de préférence
- heptadécane de formule brute C₁₇H₃₆ ou
- octadécane de formule brute C₁₈H₃₈.

6. Composant de machine (6) avec un système de refroidissement intérieur intégré (8) selon l'une quelconque des revendications précédentes, **caractérisé en ce que** la dispersion d'agent réfrigérant contient pour la stabilisation un système d'émulsifiant composé de substances tensioactives,
on utilise de préférence un système d'émulsifiant, qui présente une valeur HLB (équilibre hydrophile-/lipophile) de 8 à 15,
de préférence encore le système d'émulsifiant contient une ou un mélange d'au moins deux des substances suivantes:
- stéarate de sorbitane,
- monooléate de sorbitane,
- monostéarate de glycérol,
- alcools partiellement éthoxylés.

7. Composant de machine (6) avec un système de refroidissement intérieur intégré (8) selon la revendication précédente 6, **caractérisé en ce que** le système d'émulsifiant contient deux émulsifiants, dans lequel
un des deux émulsifiants accomplit lui-même près du ou dans le domaine de température de la transformation de phase du matériau à changement de phase un changement de phase solide-liquide et
l'autre émulsifiant présente un point de fusion légèrement supérieur,
de préférence un des deux émulsifiants est un polyoxyéthylène-monostéarate de sorbitane ou un polyoxyéthylène (6) cétylstéaryléther.

8. Composant de machine (6) avec un système de refroidissement intérieur intégré (8) selon l'une quelconque des revendications précédentes, **caractérisé en ce que** la dispersion d'agent réfrigérant contient d'autres composants ayant une température de fusion, qui se situe au-dessus de la température de transformation de phase du matériau à changement de phase (PCM), ces composants sont de préférence des substances organiques non polaires de la classe des acides gras ou des esters d'acides gras, de préférence encore pour ceux-ci l'acide palmitique ou l'acide myristique.

9. Composant de machine (6) avec un système de refroidissement intérieur intégré (8) selon l'une quelconque des revendications précédentes, **caractérisé en ce que** le composant de machine (6) est une broche d'usinage d'une machine-outil.

10. Circuit de refroidissement fermé (24) contenant un composant de machine (6) avec un système de refroidissement intérieur intégré (8) selon l'une quelconque des revendications précédentes, **caractérisé en ce que** le circuit de refroidissement (24) présente au moins une pompe (5) et au moins un puits de chaleur (9), qui soutire de la chaleur de l'agent réfrigérant (4), dans lequel le circuit de refroidissement (24) est relié par des conduites de refroidissement (7), de préférence des canalisations, à l'arrivée d'agent réfrigérant (22) et à l'évacuation d'agent réfrigérant (23) du composant de machine (6), de telle manière que le circuit de refroidissement soit fermé.

11. Circuit de refroidissement fermé (24) contenant un composant de machine (6) avec un système de refroidissement intérieur intégré (8) selon la revendication précédente 10, **caractérisé en ce que** le puits de chaleur (9) peut refroidir l'agent réfrigérant (4) lors de l'échange de chaleur tellement fortement que l'agent réfrigérant (4), qui contient au moins un matériau à changement de phase (PCM), atteigne le domaine sensible en dessous de la température de transformation de phase de la dispersion, de préférence le circuit de refroidissement fermé (24) présente à cet effet un dispositif de régulation et de mesure de la température (2, 3) au puits de chaleur (9) afin de maintenir constante la température de l'agent réfrigérant.

12. Circuit de refroidissement fermé (24) contenant un composant de machine (6) avec un système de refroidissement intérieur intégré (8) selon la revendication 10 ou 11, **caractérisé en ce que** l'agent réfrigérant (4) s'écoule, après le refroidissement dans le puits de chaleur (9), par l'arrivée d'agent réfrigérant (22) dans le système de refroidissement intérieur (8) du composant de machine (6) et refroidit d'abord une source de chaleur, qui doit être refroidie au moins en partie à une température située en dessous de la température de transformation de phase de la dispersion, dans lequel l'agent réfrigérant (4) a de préférence atteint la température de transformation de phase à la sortie de cette source de chaleur.

13. Circuit de refroidissement fermé (24) contenant un composant de machine (6) avec un système de refroidissement intérieur intégré (8) selon l'une quelconque des revendications précédentes 10 à 12, **caractérisé en ce que** le circuit de refroidissement fermé (24) et le système de refroidissement intérieur (8) du composant de machine (6) sont conçus de telle manière que, lors d'une interruption du fonctionnement du composant de machine (6), le puits de chaleur (9) du circuit de refroidissement fermé (24) puisse être désactivé et que l'énergie thermique latente accumulée dans l'agent réfrigérant (4) prolonge le maintien de la température du composant de machine (6) à la température de transformation de phase.

14. Circuit de refroidissement fermé (24) contenant un composant de machine (6) avec un système de refroidissement intérieur intégré (8) selon l'une quelconque des revendications précédentes 10 à 13, **caractérisé en ce que** la pompe (5) du circuit de refroidissement (24) est conçue de telle manière que la pompe (5) assure un mélange constant de la dispersion dans l'agent réfrigérant (4).

15. Circuit de refroidissement fermé (24) contenant un composant de machine (6) avec un système de refroidissement intérieur intégré (8) selon l'une quelconque des revendications précédentes 10 à 14, **caractérisé en ce que** la pompe (5) du circuit de refroidissement (24) est conçue, au niveau de sa construction, de telle manière que la pompe (5) favorise la mise en émulsion de constituants liquides de l'émulsion d'agent réfrigérant ou une redispersion de la phase discontinue de la suspension d'agent réfrigérant.

16. Circuit de refroidissement fermé (24) contenant un composant de machine (6) avec un système de refroidissement intérieur intégré (8) selon l'une quelconque des revendications précédentes 10 à 15, **caractérisé en ce que** la pompe (5), de préférence à vitesse variable, est une pompe de recirculation, qui est disposée, dans la direction d'écoulement de l'agent réfrigérant, de préférence avant le composant de machine (6) à refroidir, le débit d'agent réfrigérant de la pompe (5) vaut de préférence 1 à 15 l/min, de préférence encore 4 à 10 l/min.

17. Circuit de refroidissement fermé (24) contenant un composant de machine (6) avec un système de refroidissement intérieur intégré (8) selon l'une quelconque des revendications précédentes 10 à 16, **caractérisé en ce que** la pompe (5) est réalisée sous forme de stator (11) avec une couronne statorique (16) avec un rotor (12) avec une couronne rotorique (15) tournant dans celui-ci, dans lequel le diamètre extérieur du rotor (12) et le diamètre intérieur du stator (11) diffèrent de moins de 4 mm, de préférence de 1 à 2 mm, la couronne statorique (16) s'étend également dans la région de la sortie de pompe (21) de la pompe (5), et de préférence encore la pompe (5) est réalisée sous forme de pompe centrifuge (13) et présente en outre un aubage de pompe à plusieurs étages (14).

18. Circuit de refroidissement fermé (24) contenant un composant de machine (6) avec un système de refroidissement intérieur intégré (8) selon l'une quelconque des revendications précédentes 10 à 17, **caractérisé en ce qu'**une unité de dispersion (10) est placée en aval du composant de machine (6), et l'unité de dispersion (10, 13) comporte de préférence un étage de pompe et un étage de dispersion.

19. Circuit de refroidissement fermé (24) contenant un composant de machine (6) avec un système de refroidissement intérieur intégré (8) selon la revendication 18, **caractérisé en ce que** l'unité de dispersion (10) est intégrée dans le puits de chaleur (9), l'unité de dispersion (10) est de préférence montée dans un premier récipient avant le réservoir d'agent réfrigérant du puits de chaleur (9) ou dans le réservoir d'agent réfrigérant du puits de chaleur (9) lui-même.

20. Circuit de refroidissement fermé (24) contenant un composant de machine (6) avec un système de refroidissement intérieur intégré (8) selon l'une quelconque des revendications précédentes 10 à 19, **caractérisé en ce que** le circuit de refroidissement fermé (24) est conçu de telle manière qu'il se produise une différence de température de moins de 1 K entre l'arrivée d'agent réfrigérant (22) et l'évacuation d'agent réfrigérant (23) de l'agent réfrigérant (4) à la source de chaleur du composant de machine (6).

21. Machine-outil, de préférence une fraiseuse ou un tour, contenant au moins un composant de machine (6) avec un système de refroidissement intérieur intégré (8) selon l'une quelconque des revendications 1 à 9.

22. Machine-outil selon la revendication précédente 21, **caractérisée en ce que** la machine-outil présente un circuit de refroidissement fermé (24) selon l'une quelconque des revendications 10 à 20.
